# EUROPÄISCHE PATENTANMELDUNG

(11) **EP 4 303 823 A1**
(43) Veröffentlichungstag der Anmeldung: **10.01.2024**
(21) Anmeldenummer: 23181160.5
(22) Anmeldetag: 23.06.2023
(51) Int. Cl.: G06V 10/80, B60W 30/12, B60W 30/18, B60W 40/02, B60W 40/06, G01C 21/30, G08G 1/0967, G06V 20/56

(54) **EIN VERFAHREN ZUM BETRIEB EINES KRAFTFAHRZEUGS UND EIN KRAFTFAHRZEUG**

(30) Priorität: 08.07.2022 DE 102022207005
(71) Anmelder: VOLKSWAGEN AG, 38440 Wolfsburg (DE)
(72) Erfinder: Hoppe, Jannis, 38100 Braunschweig (DE); Münning, Daniel, 38124 Braunschweig (DE)

(57) **Zusammenfassung**

Die Erfindung betrifft ein Verfahren zum Betrieb eines Kraftfahrzeugs (1). In dessen Rahmen wird mittels einer Bilderfassungseinheit (4) eine optische Aufnahme einer in Fahrtrichtung des Kraftfahrzeugs (1) vorausliegenden Fahrbahn erstellt, anhand der Aufnahme (A) eine dem Kraftfahrzeug (1) zugeordnete Ego-Fahrspur (EF) der Fahrbahn ermittelt, und anhand der Aufnahme (A) ein vorausliegender Verlauf (EV) der Ego-Fahrspur (EF) ermittelt. Des Weiteren wird wenigstens eine Meta-Information erfasst, die Einfluss auf die Erkennung der Ego-Fahrspur (EF) und/oder des vorausliegenden Verlaufs (EV) der Ego-Fahrspur (EF) haben kann. Außerdem werden von einer Datenbank (6) Schwarmdaten (SD) über die Fahrbahn abgerufen, aus den Schwarmdaten (SD) eine Vergleichsfahrspur (VF) der Fahrbahn und ein Vergleichsverlauf (VV) der Vergleichsfahrspur (VF) abgeleitet und anhand der wenigstens einen Meta-Information, des vorausliegenden Verlaufs (EV) und des Vergleichsverlaufs (VV) ein Unsicherheitsfaktor (UF) für die Aufnahme (A) der Bilderfassungseinheit (4) ermittelt. In Abhängigkeit des Unsicherheitsfaktors (UF) werden Wichtungsfaktoren für den vorausliegenden Verlauf (EV) und für den Vergleichsverlauf (VV) bestimmt und für eine Fahrzeugführungsfunktion des Kraftfahrzeugs (1) auf der Fahrbahn ein in Abhängigkeit der jeweiligen Wichtungsfaktoren gemischter Mischverlauf (MV) der Ego-Fahrspur (EF) bereitgestellt.

## Beschreibung

Die Erfindung betrifft ein Verfahren zum Betrieb eines Kraftfahrzeugs. Außerdem betrifft die Erfindung ein Kraftfahrzeug, insbesondere ein solches, das das Verfahren vorzugsweise automatisch durchführt.

Moderne (landgestützte und insbesondere radgebundene) Kraftfahrzeuge werden zunehmend mit automatisierten Fahrerassistenzfunktionen ausgestattet, die dem Fahrer fortschreitend Aufgaben abnehmen. Zunächst waren dies meist spezialisierte Funktionen wie eine Fahrzeuglängsführung im Rahmen einer Geschwindigkeitsregelung mit Abstandsregelung oder einem Einparkassistenten, der auch eine Fahrzeugquerführung durchführen kann. Weiterführende Funktionen, insbesondere im Rahmen eines "Automatisierungsgrads Level 2", sind auch zeitweise automatisierte Funktionen einer Fahrzeuglängs- und querführung, bei der bspw. auf einer Autobahn Spurwechsel automatisiert durchgeführt werden können. Allerdings ist derzeit eine maximal zulässige Querbeschleunigung für einen assistierten Spurwechsel gesetzlich strikt reglementiert. So darf bspw. aktuell zusätzlich zu einer aktuellen Querbeschleunigung - die auf 3 m/s² begrenzt ist, jedoch kurzzeitig um maximal 10 Prozent überschritten werden darf - nicht mehr als 1 m/s² durch einen Spurwechsel hinzukommen.

Grundlage für die Einhaltung dieser Reglementierungen ist somit unter anderem eine möglichst exakte Kenntnis des vorausliegenden Straßenverlaufs. Grundsätzlich mag es dabei naheliegend erscheinen, dass eine in Fahrtrichtung nach vorne gerichtete Kamera die Straße, spezifischer die Fahrbahn, erfassen kann und damit der Verlauf der Fahrbahn sowie der genutzten Fahrspur der Fahrbahn bekannt sein müsste. Damit der Verlauf für ein Computerprogramm - eine vorstehend genannte Assistenzfunktion wird regelmäßig durch ein solches Computerprogramm auf einem Prozessor gebildet - "greifbar" (also auch verarbeitbar) ist, muss der Verlauf zunächst in den optischen Aufnahmen erkannt werden. Hierzu kommen meist Mustererkennungsmethoden und dergleichen zum Einsatz. Problematisch ist dabei, dass abhängig von Beleuchtungsverhältnissen, bspw. dem Einfallswinkel von Sonnenstrahlung, Dunkelheit, geringer Sichtweite aufgrund von Nebel, schlecht erkennbaren Fahrbahnmarkierungen, schadhaften Fahrbahnrändern und dergleichen der Verlauf der Fahrbahn teilweise nicht hinreichend genau geschätzt werden kann. Wird dabei bspw. eine zu kleine Fahrbahnspurkrümmung, d. h. ein zu enger Kurvenradius, angenommen, wird der Spurwechsel aufgrund der aktuellen und/oder zu erwartenden Querbeschleunigung als nicht zulässig erachtet und gegebenenfalls abgebrochen, optional auch die Steuerung an der Fahrer übergeben, obwohl dies gar nicht nötig wäre. Ein derartiges Fahrzeugverhalten wirkt sich erkanntermaßen negativ auf die Kundenakzeptanz, insbesondere also auf das Vertrauen in die Assistenzfunktion aus.

Der Erfindung liegt die Aufgrabe zugrunde, eine verbesserte Funktion einer solchen Fahrerassistenzfunktion zu ermöglichen.

Diese Aufgabe wird erfindungsgemäß gelöst durch ein Verfahren zum Betrieb eines Kraftfahrzeugs mit den Merkmalen des Anspruchs 1. Des Weiteren wird diese Aufgabe erfindungsgemäße gelöst durch ein Kraftfahrzeug mit den Merkmalen des Anspruchs 13. Vorteilhafte und teils für sich erfinderische Ausführungsformen und Weiterentwicklungen der Erfindung sind in den Unteransprüchen und der nachfolgenden Beschreibung dargelegt.

Das erfindungsgemäße Verfahren dient zum Betrieb eines (insbesondere landgestützten, radgebundenen) Kraftfahrzeugs. Im Rahmen des Verfahrens wird mittels einer Bilderfassungseinheit eine optische Aufnahme (bspw. ein Stillbild, vorzugsweise aber eine Bewegtaufnahme, vorzugsweise in Form einer fortlaufenden Erfassung von Stillbildern mit einer vorgegebenen Bildrate) einer in Fahrtrichtung des Kraftfahrzeugs vorausliegenden Fahrbahn erstellt. Anhand dieser Aufnahme wird eine dem Kraftfahrzeug zugeordnete Ego-Fahrspur der Fahrbahn ermittelt. Anhand der Aufnahme wird auch ein vorausliegender (insbesondere räumlicher) Verlauf der Ego-Fahrspur (d. h. eine Art Kurvenzug der Ego-Fahrspur) ermittelt. Außerdem wird wenigstens eine Meta-Information erfasst, die Einfluss auf die Erkennung der Ego-Fahrspur und/oder des vorausliegenden Verlaufs der Ego-Fahrspur hat oder zumindest haben kann. Von einer Datenbank werden ferner Schwarmdaten über die (insbesondere aktuell befahrene) Fahrbahn abgerufen und aus diesen Schwarmdaten eine Vergleichsfahrspur der Fahrbahn und ein Vergleichsverlauf der Vergleichsfahrspur abgeleitet. Anhand der wenigstens einen Meta-Information, des vorausliegenden Verlaufs und des Vergleichsverlaufs wird anschließend ein Unsicherheitsfaktor für die Aufnahme der Bilderfassungseinheit, insbesondere für die daraus abgeleitete Ego-Fahrspur und deren Verlauf, ermittelt. Mit anderen Worten wird anhand der vorliegenden Informationen ermittelt, wie verlässlich die Aufnahme, insbesondere die Erkennung der Ego-Fahrspur und deren Verlauf aus der Aufnahme, sein kann. In Abhängigkeit dieses Unsicherheitsfaktors werden Wichtungsfaktoren für den (abgeleiteten) vorausliegenden Verlauf und für den Vergleichsverlauf bestimmt. Unter Anwendung dieser Wichtungsfaktoren wird dann ein Mischverlauf der Ego-Fahrspur erstellt ("gemischt") und dieser für eine Fahrzeugführungsfunktion des Kraftfahrzeugs zu dessen Führung auf der Fahrbahn (d. h. also insbesondere für eine Fahrerassistenzfunktion) bereitgestellt.

Der Mischverlauf kann dabei - abhängig von den Wichtungsfaktoren - bspw. ein echter Mischverlauf sein, der Anteile sowohl des abgeleiteten Verlaufs der Ego-Fahrspur als auch des Vergleichsverlaufs enthält, oder aber auch bei hinreichend niedrigem Unsicherheitsfaktor nur der Verlauf der Ego-Fahrspur sowie entsprechend umgekehrt bei hinreichend hohem Unsicherheitsfaktor nur der Vergleichsverlauf.

Unter "Fahrbahn" wird hier und im Folgenden insbesondere der gesamte, vorzugsweise aus einem einheitlichen Aufbau gebildete Fahrweg verstanden. Die "Fahrspur" oder auch der "Fahrstreifen" ist insbesondere ein in der Breite für ein Kraftfahrzeug auf der Fahrbahn abgegrenzter Bereich. Üblicherweise beinhaltet die Fahrbahn auch in die entgegenkommende Fahrtrichtung führende Fahrspuren. Im Fall baulich getrennter Fahrtrichtungen kann die Fahrbahn aber auch nur in eine Fahrtrichtung führende Fahrspuren enthalten.

Vorzugsweise werden die vorstehend beschriebenen Schritte wie z. B. die Ermittlung der Fahrbahn sowie der Ego-Fahrspur etc. unter Zuhilfenahme einer Steuereinheit (auch: "Controller"), konkret durch einen solchen Controller, genauer einen Prozessor des Controllers ausgeführt.

Unter "Fahrzeugführungsfunktion", "Fahrzeugquerführung" und dergleichen wird hier und im Folgenden insbesondere nicht nur die Ausführung und Übertragung von Steuerungsbefehlen (also Lenkmaßnahmen, Beschleunigen, Bremsen und dergleichen) verstanden, sondern insbesondere die (gesamte) Funktionalität (insbesondere bei Ausführung eines entsprechenden Programms auf dem Controller), die neben der Abgabe und Ausführung von Steuerungsbefehlen auch die Verarbeitung von Hintergrunddaten (bspw. den Mischverlauf) umfasst, um die Steuerungsbefehle auch möglichst präzise sowie rechtlich zulässig erzeugen zu können.

Zur Verarbeitung durch den Controller werden die Fahrbahn und auch die Ego-Fahrspur (sowie auch die Vergleichsfahrspur) definiert über seitliche (insbesondere virtuelle) Begrenzungen, die bspw. auf Basis einer in der Aufnahme erkannten Fahrbahnmarkierung und/oder Fahrbahnbelagsgrenze oder dergleichen ermittelt werden.

Erfindungsgemäß erfolgt also eine Beurteilung der aktuellen Situation, konkret der Qualität der Ermittlung des Verlaufs der Ego-Fahrspur aus der aktuell erfassten Aufnahme, sowie eine von dieser Qualität abhängige Verwertung unterschiedlicher Informationen über die vorausliegende Fahrbahn. Wird von einer hinreichend hohen Qualität der Ermittlung des Verlaufs der Ego-Fahrspur ausgegangen, kann dieser (zumindest nahezu) unverändert für die Fahrzeugführung herangezogen werden. Wird von einer verringerten Qualität ausgegangen, kommen die Schwarmdaten unterstützend oder auch (bei besonders geringer Qualität) ausschließlich zum Einsatz. Von diesen kann - aufgrund einer anzunehmend hohen Anzahl von Datenquellen für die Schwarmdaten - angenommen werden, dass individuelle Fehler statistisch geringere Relevanz und Auswirkung haben und die Schwarmdaten somit eine vergleichsweise hohe Verlässlichkeit haben. Somit schafft die Erfindung eine Möglichkeit, für die Fahrzeugführung vergleichsweise verlässliche Daten zur Verfügung zu stellen, so dass eine Entscheidungsgrundlage für die (insbesondere automatisierte) Fahrzeugführung verbessert werden kann.

In einer zweckmäßigen Verfahrensvariante wird aus den Schwarmdaten eine Fahrlinie (auch als sogenannter "drivable path" bezeichnet) für die Vergleichsfahrspur abgeleitet. Dieser drivable path entspricht dabei vorzugsweise der Linie auf der Fahrspur, der die die Schwarmdaten erzeugenden anderen Fahrzeuge "gefolgt" sind, diese also "befahren" haben. Des Weiteren wird eine Ego-Position des Kraftfahrzeugs auf der Fahrbahn, vorzugsweise innerhalb der Ego-Fahrspur, bevorzugt in Bezug auf wenigstens eine Seitengrenze der Ego-Fahrspur (bspw. eine der vorstehend genannten, erkannten Begrenzungen wie z. B. eine Fahrbahnmarkierung), ermittelt und mit dem drivable path verglichen. Anders ausgedrückt wird die eigene Position (Ego-Position) des Kraftfahrzeugs (auch: Ego-Fahrzeug) auf der befahrenen Fahrspur (Ego-Fahrspur) bestimmt und mit dem drivable path verglichen. Wie vorstehend beschrieben, kann aus statistischen Gründen davon ausgegangen werden, dass der drivable path vergleichsweise gut, zumindest mit nur geringen Auswirkung von Fehlern (Fahrfehler sowie auch Fehler in Folge von Fehlerkennungen automatisierter Fahrfunktionen) individueller Fahrzeuge, einen befahrbaren Kurvenzug auf der Fahrbahn bzw. Fahrspur wiedergibt. Über den Vergleich der Ego-Position mit dem drivable path kann somit eine Information abgeleitet werden, ob die Ego-Position (hinreichend) mit dem drivable path übereinstimmt. Bspw. kann daraus abgeleitet werden, ob die Erkennung der Ego-Fahrspur hinreichend präzise erfolgt.

In einer vorteilhaften Weiterbildung wird (insbesondere anhand des Vergleichs) ein Übereinstimmungsmaß für die Ego-Position zu dem drivable path ermittelt. Beispielsweise handelt es sich dabei um eine lokale Differenz der Ego-Position zu einem entsprechenden "Wegpunkt" des privable path, die bspw. absolut (bspw. auf Basis von Satellitennavigationsdaten) oder relativ zu einer Begrenzung der (Ego-) Fahrspur bestimmt wird. Das Übereinstimmungsmaß wird dann - insbesondere zusätzlich - für die Bestimmung des Unsicherheitsfaktors und/oder für die Bestimmung der Wichtungsfaktoren herangezogen. Beispielsweise kann bei einer hohen Übereinstimmung der Ego-Position mit dem drivable path eine etwa 50:50 Wichtung der Ego-Fahrspur und der Vergleichsfahrspur eingestellt werden, da davon ausgegangen werden kann, dass die Positionierung des Kraftfahrzeugs auf der Fahrbahn und damit auch die Erkennung der Ego-Fahrspur aktuell vergleichsweise korrekt ist. Bei einem besonders hohen Übereinstimmungsmaß kann grundsätzlich auch eine stärkere Wichtung der Ego-Fahrspur (bspw. 60: 40, 80:20, 90:10 oder ähnliches) erfolgen.

Vorteilhaft ist es auch, wenn zum Vergleich der Ego-Position mit der Fahrlinie ein vorausgegangener zeitlicher Verlauf der Ego-Position herangezogen wird. Insbesondere kann in diesem Fall also ein Vergleich des drivable path mit einem aus der Aufnahme abgeleiteten "driven path" (bspw. für die letzten 5 Sekunden) durchgeführt werden. Dies kann eine größere Aussagekraft über die relative Positionierung des Kraftfahrzeugs auf der Fahrbahn liefern als ein lediglich punktueller Vergleich.

In einer zweckmäßigen Verfahrensvariante wird in Abhängigkeit des Unsicherheitsfaktors ein Wichtungsfaktor auch für den drivable path bestimmt. In diesem Fall wird der anhand des Wichtungsfaktors gewichtete drivable path auch zur Erstellung des Mischverlaufs herangezogen. Beispielsweise kann bei einer besonders hohen Übereinstimmung der Ego-Position mit dem drivable path (ggf. unabhängig von der Genauigkeit der Erkennung der Ego-Fahrspur), bspw. bei einer Abweichung von unter 10 % oder weniger als einem halben Meter) ein Wichtungsfaktor für den drivable path derart gewählt werden, dass der drivable path alleine (d. h. zu 100%), auch nur mit dem Verlauf der Ego-Fahrspur gemischt (bspw. als 50:50 Wichtung mit der Ego-Fahrspur), oder - insbesondere bei geringerer Übereinstimmung - auch mit dem "Ego-Verlauf" und dem Vergleichsverlauf, zur Erstellung des Mischverlaufs herangezogen wird.

In einer weiteren zweckmäßigen Verfahrensvariante wird als wenigstens eine Meta-Information eine aktuelle veränderliche Umweltsituation und/oder eine näherungsweise unveränderliche Umgebungseigenschaft erfasst. Vorzugsweise werden als jeweils eine Meta-Information sowohl die Umweltsituation als auch die Umgebungseigenschaft erfasst und zur Bestimmung des Unsicherheitsfaktors herangezogen.

Vorzugsweise wird als aktuelle Umweltsituation der Sonnenstand (insbesondere als ein Lichteinfallswinkel des Sonnenlichts), eine Beleuchtungsart (z. B. Tageslicht oder Nacht, d. h. Dunkelheit; wechselnde Beleuchtung aufgrund "fleckiger" Bewölkung oder lokales Laternenlicht nachts; Helligkeit aber keine direkte Sonneneinstrahlung aufgrund einer geschlossenen Wolkenschicht etc.), eine Sichtweite (bspw. Nebel) und/oder das Wetter (insbesondere Regen, Schnee) ermittelt. Beispielsweise kann ein flacher Sonnenstand mit Gegenlicht die Erkennung von Fahrbahnmarkierungen erschweren, bspw. auch unterstützt durch eine regennasse Fahrbahn nach Niederschlag, oder Schnee kann Fahrbahnmarkierungen und Fahrbelagsgrenzen zeitweise verdecken.

Als näherungsweise unveränderliche Umgebungseigenschaft wird beispielsweise ein Fahrbahntyp (Asphalt, Beton, Schotter, einspurig, zweispurig, mit oder ohne Mittelmarkierung, mit Seitenmarkierung, mit Gehsteig und dergleichen), eine Markierungsqualität einer Fahrbahnmarkierung und/oder eine Qualität des Fahrbahnbelags am Übergang zu einem Bankett ermittelt.

Für die Ermittlung der wenigstens einen Meta-Information werden optional zusätzliche Sensoren, z. B. Regensensoren, Helligkeitssensoren und dergleichen, eingesetzt. Zusätzlich oder alternativ wird die wenigstens eine Meta-Information anhand der Aufnahme der Bilderfassungseinheit (insbesondere in Bezug auf die unveränderlichen Umgebungseigenschaften) ermittelt.

Optional kann auch eine tageszeitabhängige Vorgabe des Unsicherheitsfaktors und/oder der Wichtungsfaktoren erfolgen. Bspw. kann bei Nacht ein Unterschreiten eines vorgegebenen Unsicherheitswerts ausgeschlossen sein, bspw. um zu verhindern, dass bei Nacht der Mischverlauf ausschließlich aus dem Ego-Verlauf geniert wird. Gleiches gilt für den Sonnenstand, so dass bei einem flachen Sonnenstand und damit einhergehendem Gegenlicht der Unsicherheitsfaktor für eine korrekte Erkennung der Ego-Fahrspur vergleichsweise hoch angesetzt wird (so dass wiederum der Mischverlauf nicht allein aus dem Ego-Verlauf erstellt werden kann).

Optional werden die Vergleichsfahrspur der Fahrbahn und deren Vergleichsverlauf mittels Mittelwertbildung (insbesondere aus den bezogenen Schwarmdaten) ermittelt.

Weiter können optional auch die Ego-Fahrspur, deren vorausliegender Verlauf, die Vergleichsfahrspur, deren Vergleichsverlauf und/oder der drivable path vor der Bestimmung des Unsicherheitsfaktors gefiltert, insbesondere geglättet werden.

Außerdem kann zweckmäßigerweise bei der Bestimmung des Unsicherheitsfaktors auch eine Lokalisierungskonfidenz der Schwarmdaten berücksichtigt werden. Diese gibt insbesondere an, mit welch hoher Sicherheit das Ego-Fahrzeug richtig "über" (d. h. korrekt im Verhältnis zu) den Schwarmdaten positioniert ist. Die Lokalisierungskonfidenz wird vorzugsweise "online", d. h. insbesondere fahrzeugseitig, vorzugsweise mittels des vorstehend genannten Controllers, ermittelt. Für den Fall, dass die Lokalisierungskonfidenz einen kleinen Wert aufweist (also die Sicherheit, dass das Ego-Fahrzeug "richtig" zu den Schwarmdaten positioniert ist, niedrig ist), wird den Schwarmdaten (insbesondere also der Vergleichsfahrspur und dem Vergleichsverlauf, optional auch dem drivable path) ein vergleichsweise geringer Wichtungsfaktor zugewiesen, bei hohem Wert der Lokalisierungskonfidenz vorzugsweise entsprechend umgekehrt.

In einer zweckmäßigen Verfahrensvariante kann anhand des Mischverlaufs der Ego-Fahrspur eine (insbesondere räumliche) Spurkrümmung des Verlaufs der Ego-Fahrspur ermittelt werden. Diese Spurkrümmung kann dann vorteilhafterweise (bspw. im Rahmen einer oder für eine Fahrzeugquerführung), die wiederum insbesondere zur Beurteilung einer Zulässigkeit eines Fahrspurwechsels verwendet wird, herangezogen werden. Insbesondere für den Fall, dass der drivable path und vorzugsweise auch das Übereinstimmungsmaß zur Ego-Position ermittelt werden, kann die Spurkrümmung bei hoher Übereinstimmung der Ego-Position und dem drivable path (anders ausgedrückt: wenn das Ego-Fahrzeug dem drivable path vergleichsweise exakt folgt) besonders präzise aus dem drivable path ermittelt und somit auch die Querbeschleunigung besonders genau geschätzt werden. In letzterem Fall kann es also vorteilhaft sein, den drivable path bei hohem Übereinstimmungsmaß mit der Ego-Position einen hohen Wichtungsfaktor zuzuweisen.

Das erfindungsgemäße Kraftfahrzeug weist die vorstehend beschriebene Bilderfassungseinheit (insbesondere eine Digitalkamera), eine Kommunikationseinheit (bspw. ein Dateninterface) zur Kommunikation mit der Datenbank) und die vorstehend genannte Steuereinheit (Controller) auf. Die Steuereinheit ist mit der Bilderfassungseinheit und der Kommunikationseinheit signalübertragungstechnisch verknüpft und dazu eingerichtet, das vorstehend beschriebene Verfahren vorzugsweise selbsttätig durchzuführen.

Somit weist das Kraftfahrzeug - zumindest bei Ausführung des vorstehend beschriebenen Verfahrens durch die Steuereinheit - die gleichen Merkmale sowie die sich daraus ergebenden Vorteile auf wie das vorstehend beschriebene Verfahren.

Dadurch, dass wie vorstehend beschrieben insbesondere also eine Art Plausibilisierung zumindest der mittels der Bilderfassungseinheit erfassten und abgeleiteten Daten (also der Aufnahmen sowie der daraus extrahierten Ego-Fahrspur etc.) vorgenommen und gegebenenfalls mit Schwarmdaten gemischt oder letztere sogar - bei schlechter Qualität der eigenen Daten - alleine verwendet werden, kann die Genauigkeit bei der Ermittlung des vorausliegenden Verlaufs der Ego-Fahrspur verbessert werden. Insbesondere können von einer automatisierten Fahrzeugführungsfunktion beabsichtige Fahrspurwechsel besser auf deren Zulässigkeit überprüft werden (z. B. aufgrund einer Prüfung, ob bei der aktuellen Geschwindigkeit des Kraftfahrzeugs die vorausliegende Spurkrümmung der Ego-Fahrspur zu einer außerhalb eines zulässigen Bereichs liegenden Querbeschleunigung führen würde, wenn zusätzlich zur Spurkrümmung noch ein Fahrspurwechsel erfolgen würde), so dass das Risiko für einen Abbruch der automatisierten Fahrzeugführung verringert werden kann.

Der Controller (oder die Steuereinheit) kann im Rahmen der Erfindung als nicht-programmierbare elektronische Schaltung ausgebildet sein und hierbei beispielsweise durch einen "Bordcomputer" des Kraftfahrzeugs gebildet sein. Der Controller kann im Rahmen der Erfindung allerdings auch durch einen Mikrocontroller gebildet sein, in dem die Funktionalität zur Durchführung des erfindungsgemäßen Verfahrens in Form eines Softwaremoduls implementiert ist.

Die Konjunktion "und/oder" ist hier und im Folgenden insbesondere derart zu verstehen, dass die mittels dieser Konjunktion verknüpften Merkmale sowohl gemeinsam als auch als Alternativen zueinander ausgebildet sein können.

Nachfolgend wird ein Ausführungsbeispiel der Erfindung anhand einer Zeichnung näher erläutert. Darin zeigen:
- Fig. 1: in einem schematischen Blockdiagramm ein Verfahren zum Betrieb eines Kraftfahrzeugs, und
- Fig. 2: in einer schematischen Seitenansicht das Kraftfahrzeug, das zur Durchführung des Verfahrens eingerichtet ist.

Einander entsprechende Teile sind in allen Figuren stets mit gleichen Bezugszeichen versehen.

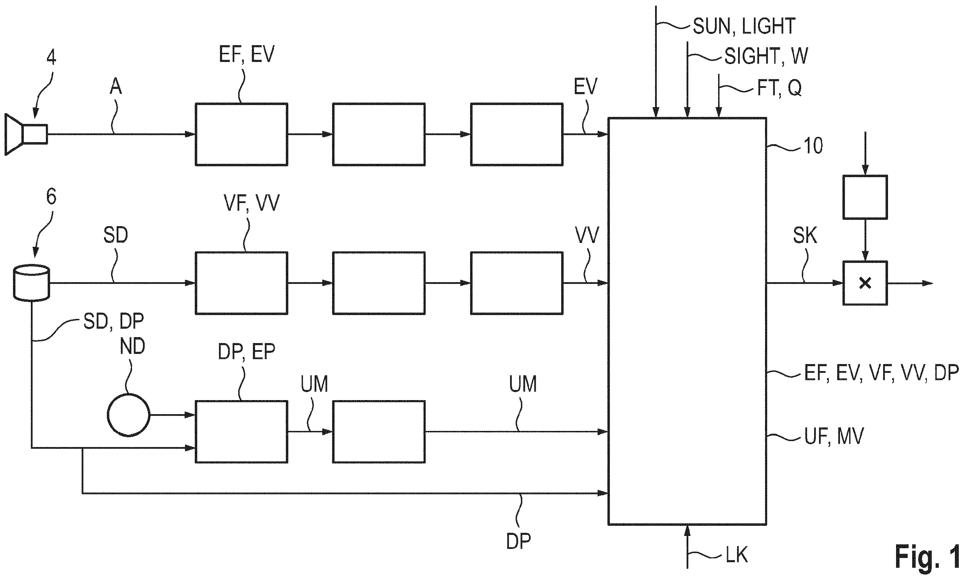

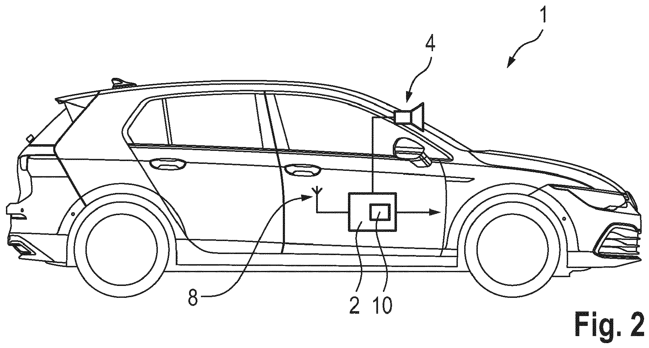

In Fig. 1 ist schematisch ein Verfahren dargestellt, das im bestimmungsgemäßen Betrieb eines in Fig. 2 näher dargestellten Kraftfahrzeugs 1 von einer Steuereinheit 2 (auch: Controller) des Kraftfahrzeugs 1 selbsttätig durchgeführt wird. Das Verfahren dient dabei zum Betrieb des Kraftfahrzeugs 1.

Im Rahmen des Verfahrens wird dabei mittels einer Bilderfassungseinheit, hier eine in Fahrtrichtung gerichtete Kamera 4, eine optische Aufnahme A einer in Fahrtrichtung des Kraftfahrzeugs 1 vorausliegenden Fahrbahn erstellt und der Steuereinheit 2 zugeführt. Anhand dieser Aufnahme A wird eine dem Kraftfahrzeug 1 zugeordnete Ego-Fahrspur EF der Fahrbahn ermittelt. Bei einer mehrspurigen Fahrbahn wird dabei die von dem Kraftfahrzeug 1 aktuell befahrene Fahrspur als Ego-Fahrspur gewählt. Anhand der Aufnahme A wird auch ein vorausliegender (insbesondere räumlicher) Verlauf EV der Ego-Fahrspur (d. h. eine Art Kurvenzug der Ego-Fahrspur EF) ermittelt.

Zur Erkennung des Verlaufs EV führt die Steuereinheit 2 eine Mustererkennung auf der Aufnahme A durch, um seitliche Begrenzungen der Fahrbahn in Form von Grenzen des Fahrbahnbelags (insbesondere zum Bankett hin) sowie auch in Form von Spurmarkierungen (Fahrbahnmarkierungen) zu erkennen.

Der Verlauf EV wird in einem optional nachfolgenden Schritt gefiltert, bspw. geglättet.

Parallel hierzu - nicht zwingend zeitlich parallel sondern zumindest funktional - werden Schwarmdaten SD zu der aktuell genutzten Fahrbahn von einer Datenbank 6 abgerufen. Dazu umfasst das Kraftfahrzeug 1 eine Kommunikationsschnittstelle 8, hier beispielhaft als Funkschnittstelle dargestellt.

Aus diesen Schwarmdaten SD werden eine Vergleichsfahrspur VF der Fahrbahn und ein Vergleichsverlauf VV der Vergleichsfahrspur VF abgeleitet. Dazu werden in den Schwarmdaten SD enthaltene Informationen über von Drittfahrzeugen erfasste seitliche Begrenzungen ausgewertet, bspw. eine Vielzahl von gleichartigen Begrenzungen (z. B. Spurmarkierungen) gemittelt. Anschließend wird auch der Vergleichsverlauf VV vergleichbar zum Verlauf EV der Ego-Fahrspur EF gefiltert.

Aus den Schwarmdaten SD wird des Weiteren auch eine Fahrlinie, "drivable path DP", bezogen. Im dargestellten Ausführungsbeispiel ist der drivable path DP bereits Teil der Schwarmdaten SD, alternativ wird der drivable path DP aus den Schwarmdaten SD abgeleitet ("errechnet"). Der drivable path DP stellt dabei die von den Drittfahrzeugen in der Vergleichsfahrspur VF gefahrene "Bewegungslinie" dar.

Parallel dazu wird für das Kraftfahrzeug 1, bspw. anhand von Navigationsdaten ND eine sogenannte Ego-Position EP ermittelt, die die Position des Kraftfahrzeugs 1 in der Ego-Fahrspur EF angibt. Die Ego-Position EP, optional deren zeitlicher Verlauf, wird mit dem drivable path DP verglichen und dabei ein Übereinstimmungsmaß UM ermittelt. Das Übereinstimmungsmaß UM gibt dabei bspw. eine laterale Differenz der Ego-Position EP zum drivable path DP an, d. h. wie weit das Kraftfahrzeug 1 innerhalb der Ego-Fahrspur EF quer zum drivable path DP versetzt ist.

Optional wird auch das Übereinstimmungsmaß UM gefiltert.

Der Verlauf EV der Ego-Fahrspur EF, der Vergleichsverlauf VV, der drivable path DP sowie auch das Übereinstimmungsmaß UM werden einem Auswertungsblock 10 zugeführt.

Außerdem werden verschiedene Meta-Informationen erfasst, die Einfluss auf die Erkennung der Ego-Fahrspur EF und/oder des vorausliegenden Verlaufs EV der Ego-Fahrspur EF haben. Dabei werden veränderliche Umweltsituationen wie der Sonnenstand SUN, eine Beleuchtungsart LIGHT, eine Sichtweite SIGHT und/oder das Wetter W erfasst und dem Auswertungsblock zugeführt. Zudem werden dabei auch zumindest für die vorliegende Anwendung quasi unveränderliche Umgebungseigenschaften erfasst, nämlich ein Fahrbahntyp FT (bspw. ob die Fahrbahn aus Asphalt, Beton, oder Schotter gebildet ist; einspurig, zweispurig, mit oder ohne Mittelmarkierung, mit Seitenmarkierung, mit Gehsteig und dergleichen ausgebildet ist) und eine Markierungsqualität Q einer Fahrbahnmarkierung ermittelt und ebenfalls dem Auswertungsblock 10 zugeführt.

Für die Schwarmdaten SD wird außerdem eine "Lokalisierungskonfidenz LK" erhoben und dem Auswertungsblock 10 zugeführt. Dies Lokalisierungskonfidenz LK gibt eine Sicherheit an, mit der die Ego-Position EP richtig zu den Schwarmdaten SD, insbesondere also zum Vergleichsverlauf VV und/oder dem drivable path DP positioniert ist.

Anhand der Meta-Informationen, der Lokalisierungskonfidenz LK, des Verlaufs EF und des Vergleichsverlaufs VV wird anschließend ein Unsicherheitsfaktor UF für die aus der Aufnahme A der Kamera 4 abgeleitete Ego-Fahrspur EF und deren Verlauf EF ermittelt. In einer einfachen Variante werden die Meta-Informationen beurteilt, ob diese eine optische Erkennung der Fahrspur-Grenzen unterstützen (bspw. bei hohen Sonnenstand SUN und Tageslicht, keinem Niederschlag und keinem Nebel) oder eher verhindern. Ist ersteres der Fall und die Lokalisierungskonfidenz LK hoch, wird ein Vergleich des Verlaufs EF der Ego-Fahrspur EF und des Vergleichsverlaufs VV durchgeführt. Sind der Verlauf EF und der Vergleichsverlauf hinreichend ähnlich, überdecken sich also nahezu vollständig, wird davon ausgegangen, dass der Verlauf EF verlässlich ermittelt wurde. In diesem Fall wird ein niedriger Unsicherheitsfaktor UF gewählt und jeweils ein Wichtungsfaktor für den Verlauf EF, den Vergleichsverlauf VV und den drivable path DP derart gewählt, dass der Verlauf EF allein oder mit überwiegendem Anteil in einen aus den drei Größen gebildeten Mischverlauf MV eingeht.

Dieser Mischverlauf MV wird anschließend dazu herangezogen eine Spurkrümmung SK zu ermitteln (zu schätzen) und diese nachgelagert bspw. für die Ermittlung einer Querbeschleunigung heranzuziehen. Die Spurkrümmung SK und die daraus resultierende Querbeschleunigung kann dann im Rahmen einer Fahrzeugführungsfunktion herangezogen werden, um Lenkmanöver oder dergleichen beurteilen zu können.

Deuten die Meta-Informationen darauf hin, dass die Ermittlung der Ego-Fahrspur und deren Verlauf EV erschwert ist (bspw. niedriger Sonnenstand SUN, der zu Gegenlicht führt, nasse Fahrbahn, schlechte Qualität Q der Fahrbahnmarkierungen) und liegt eine vergleichsweise große Differenz zwischen Verlauf EF und Vergleichsverlauf VV (sowie optional auch ein geringes Übereinstimmungsmaß UM) vor, wird ein hoher Unsicherheitsfaktor UF angesetzt und die Wichtungsfaktoren derart vorgegeben, dass der aus der Aufnahme A abgeleitete Verlauf EF nicht oder nur zu einem besonders geringen Anteil in den Mischverlauf MV eingeht.

In einer optionalen Variante kann die Auswertung im Auswertungsblock 10 alternativ zu einem festen Regelsatz auch mittels künstlicher Intelligenz, bspw. einem abschließend eingelernten neuronalen Netz, einem Entscheidungsbaum oder dergleichen, erfolgen.

Der Gegenstand der Erfindung ist nicht auf das vorstehend beschriebene Ausführungsbeispiel beschränkt. Vielmehr können weitere Ausführungsformen der Erfindung von dem Fachmann aus der vorstehenden Beschreibung abgeleitet werden.

### Bezugszeichenliste

- 1: Kraftfahrzeug
- 2: Steuerelement
- 4: Kamera
- 6: Datenbank
- 8: Kommunikationsschnittstelle
- 10: Auswertungsblock
- A: Aufnahme
- EF: Ego-Fahrspur
- EV: Verlauf
- SD: Schwarmdaten
- VF: Vergleichsfahrspur
- VV: Vergleichsverlauf
- DP: drivable path
- ND: Navigationsdaten
- EP: Ego-Position
- UM: Übereinstimmungsmaß
- SUN: Sonnenstand
- LIGHT: Beleuchtungsart
- SIGHT: Sichtweite
- W: Wetter
- FT: Fahrbahntyp
- Q: Markierungsqualität
- LK: Lokalisierungskonfidenz
- MV: Mischverlauf
- SK: Spurführung

## Patentansprüche

1. Verfahren zum Betrieb eines Kraftfahrzeugs (1), wobei
- mittels einer Bilderfassungseinheit (4) eine optische Aufnahme einer in Fahrtrichtung des Kraftfahrzeugs (1) vorausliegenden Fahrbahn erstellt wird,
- anhand der Aufnahme (A) eine dem Kraftfahrzeug (1) zugeordnete Ego-Fahrspur (EF) der Fahrbahn ermittelt wird,
- anhand der Aufnahme (A) ein vorausliegender Verlauf (EV) der Ego-Fahrspur (EF) ermittelt wird,
- wenigstens eine Meta-Information erfasst wird, die Einfluss auf die Erkennung der Ego-Fahrspur (EF) und/oder des vorausliegenden Verlaufs (EV) der Ego-Fahrspur (EF) haben kann,
- von einer Datenbank (6) Schwarmdaten (SD) über die Fahrbahn abgerufen werden,
- aus den Schwarmdaten (SD) eine Vergleichsfahrspur (VF) der Fahrbahn und ein Vergleichsverlauf (VV) der Vergleichsfahrspur (VF) abgeleitet werden,
- anhand der wenigstens einen Meta-Information, des vorausliegenden Verlaufs (EV) und des Vergleichsverlaufs (VV) ein Unsicherheitsfaktor (UF) für die Aufnahme (A) der Bilderfassungseinheit (4) ermittelt wird,
- in Abhängigkeit des Unsicherheitsfaktors (UF) Wichtungsfaktoren für den vorausliegenden Verlauf (EV) und für den Vergleichsverlauf (VV) bestimmt werden, und
- für eine Fahrzeugführungsfunktion des Kraftfahrzeugs (1) auf der Fahrbahn ein in Abhängigkeit der jeweiligen Wichtungsfaktoren gemischter Mischverlauf (MV) der Ego-Fahrspur (EF) bereitgestellt wird.

2. Verfahren nach Anspruch 1,
wobei aus den Schwarmdaten (SD) eine Fahrlinie (DP) für die Vergleichsfahrspur (VF) abgeleitet wird, wobei eine Ego-Position (EP) das Kraftfahrzeugs (1) auf der Fahrbahn, vorzugsweise innerhalb der Ego-Fahrspur (EF), bevorzugt in Bezug auf wenigstens eine Seitengrenze der Ego-Fahrspur (EF), ermittelt und mit der Fahrlinie (DP) verglichen wird.

3. Verfahren nach Anspruch 2,
wobei ein Übereinstimmungsmaß (UM) für die Ego-Position (EP) zu der Fahrlinie (DP) ermittelt wird, und wobei das Übereinstimmungsmaß (UM) für die Bestimmung des Unsicherheitsfaktors (UF) und/oder für die Bestimmung der Wichtungsfaktoren herangezogen wird.

4. Verfahren nach Anspruch 2 oder 3,
wobei zum Vergleich der Ego-Position (EP) mit der Fahrlinie (DP) ein vorausgegangener zeitlicher Verlauf der Ego-Position (EP) herangezogen wird.

5. Verfahren nach einem der Ansprüche 2 bis 4,
wobei in Abhängigkeit des Unsicherheitsfaktors (UF) ein Wichtungsfaktor für die Fahrlinie (DP) bestimmt wird, und wobei die mittels des Wichtungsfaktors gewichtete Fahrlinie (DP) zur Erstellung des Mischverlaufs (MV) herangezogen wird.

6. Verfahren nach einem der Ansprüche 1 bis 5,
wobei als wenigstens eine Meta-Information eine aktuelle veränderliche Umweltsituation und/oder eine näherungsweise unveränderliche Umgebungseigenschaft erfasst wird.

7. Verfahren nach Anspruch 6,
wobei als aktuelle Umweltsituation der Sonnenstand (SUN), eine Beleuchtungsart (LIGHT), eine Sichtweite (SIGHT) und/oder das Wetter (W) ermittelt wird.

8. Verfahren nach Anspruch 6 oder 7,
wobei als näherungsweise unveränderliche Umgebungseigenschaft ein Fahrbahntyp (FT), eine Markierungsqualität (Q) einer Fahrbahnmarkierung und/oder eine Qualität des Fahrbahnbelags am Übergang zu einem Bankett ermittelt wird.

9. Verfahren nach einem der Ansprüche 1 bis 8,
wobei die wenigstens eine Meta-Information anhand der Aufnahme (A) der Bilderfassungseinheit (4) ermittelt wird.

10. Verfahren nach einem der Ansprüche 1 bis 9,
wobei die Ego-Fahrspur (EF), deren vorausliegender Verlauf (EV), die Vergleichsfahrspur (VF), deren Vergleichsverlauf (VV) und/oder die Fahrlinie (DP) vor Bestimmung des Unsicherheitsfaktors (UF) gefiltert, insbesondere geglättet werden.

11. Verfahren nach einem der Ansprüche 1 bis 10,
wobei bei der Bestimmung des Unsicherheitsfaktors (UF) eine Lokalisierungskonfidenz (LK) der Schwarmdaten (SD) berücksichtigt wird.

12. Verfahren nach einem der Ansprüche 1 bis 11,
wobei anhand des Mischverlaufs (MV) der Ego-Fahrspur (EF) eine Spurkrümmung (SK) des Verlaufs der Ego-Fahrspur (EF) ermittelt wird und die Spurkrümmung (SK) für eine Fahrzeugquerführung, insbesondere zur Beurteilung einer Zulässigkeit eines Fahrspurwechsels, herangezogen wird.

13. Kraftfahrzeug (1) aufweisend eine Bilderfassungseinheit (4), eine Kommunikationseinheit (8) und eine Steuereinheit (2), die mit der Bilderfassungseinheit (4) und der Kommunikationseinheit (8) signalübertragungstechnisch verknüpft und dazu eingerichtet ist, ein Verfahren gemäß einem der Ansprüche 1 bis 12 durchzuführen.
